# EUROPEAN PATENT APPLICATION

(11) **EP 3 805 915 A1**
(43) Date of publication of application: **14.04.2021**
(21) Application number: 20200796.9
(22) Date of filing: 08.10.2020
(51) Int. Cl.: G06F 3/16, G10L 19/018

(54) **ELECTRONIC APPARATUS AND CONTROL METHOD THEREOF**

(30) Priority: 10.10.2019 KR 20190124976
(71) Applicant: Samsung Electronics Co., Ltd., Gyeonggi-do 16677 (KR)
(72) Inventor: PARK, Youngin, 16677 Gyeonggi-do (KR)
(74) Representative: Walaski, Jan Filip

(57) **Abstract**

An electronic apparatus is provided. The electronic apparatus includes a signal output interface; and a processor configured to: identify a waveform characteristic of sound received through a sound input interface, identify information corresponding to the identified waveform characteristic of the sound, based on a plurality of attributes indicated by the waveform characteristic of the sound, and output a signal to an external apparatus through the signal output interface based on the identified information.

## Description

### BACKGROUND

### 1. Field

The disclosure relates to an electronic apparatus provided to obtain an audio signal by causing a microphone to capture sound from an external environment, and a control method thereof, and more particularly, to an electronic apparatus having a structure to obtain predetermined information from an external apparatus having a speaker, and a control method thereof.

### 2. Description of Related Art

In order to compute and process predetermined information according to a specific process, an electronic apparatus basically including electronic components such as a CPU, a chipset, and a memory for computation maybe classified depending on what information is to be processed by the electronic apparatus or what function is performed by the electronic apparatus. For example, the electronic apparatus maybe classified as an information processing apparatus such as a PC or a server that processes general-purpose information, an image processing apparatus that processes image data, an audio apparatus that processes audio, a household appliance that performs household chores, and the like. A display apparatus that displays processed image data as an image on a display panel provided therein is an example of an image processing apparatus.

As user needs increase and technology advances, there is a growing demand for a local network system in which a plurality of electronic apparatuses are interconnected to be able to communicate with each other such that one or more of the electronic apparatuses may be used by more than one of the other electronic apparatuses. Examples of such a local network system include a home network environment, an Internet of Things (IoT) environment, and the like. A plurality of electronic apparatuses in the local network system may be interconnected based on various communication protocols. However, the situation in which the communication between the electronic apparatuses is restricted may occur due to various factors such as a connection environment of the electronic apparatuses and characteristics of the electronic apparatuses. This situation is possible in several cases as follows.

For example, if the electronic apparatus and the external apparatus support wireless communication with each other, but have not yet been paired, it may be difficult to exchange information between the electronic apparatus and the external apparatus. Typically, in this case, it is difficult for the electronic apparatus to communicate with the external apparatus that is in an unpaired state.

Alternatively, even if the electronic apparatus and the external apparatus are interconnected to enable communication, the communication may be difficult due to various factors. Even if the electronic apparatus and the external apparatus are interconnected to enable wireless communication, when the wireless communication environment is poor due to network traffic, noise, or the like, communication may be delayed or communication may not be possible at all.

Alternatively, reverse communication may be difficult because the electronic apparatus and the external apparatus are interconnected by one-way communication. For example, if the electronic apparatus is connected to the external apparatus to transmit data to the external apparatus through an optical communication cable, the electronic apparatus may not be able to receive data from the external apparatus. In this case, because the electronic apparatus may not know characteristics of the external apparatus, it may be difficult to provide data suitable for the characteristics of the external apparatus.

Accordingly, there is a need to a simple and effective method of performing communication between an electronic apparatus and an external apparatus.

### SUMMARY

In accordance with an aspect of the disclosure an electronic apparatus includes: a signal output interface; and a processor configured to: identify a waveform characteristic of sound received through a sound input interface, identify information corresponding to the identified waveform characteristic of the sound, based on a plurality of attributes indicated by the waveform characteristic of the sound, and output a signal to an external apparatus through the signal output interface based on the identified information.

The waveform characteristic comprises may include any one or any combination of amplitude, frequency, or a period of the sound.

The processor may be further configured to identify binary data corresponding to the amplitude, the frequency, or the period and identify the information based on the identified binary data.

The processor may be further configured to identify the information according to a combination of any combination of two or more of the amplitude, the frequency, or the period.

The information may include information related to the external apparatus.

The processor may be further configured to: identify a state of the external apparatus based on the identified information, and output the signal based on the identified state of the external apparatus.

The sound may correspond to an inaudible frequency band.

The signal output to the external apparatus may include an audio signal.

The signal output interface may be configured to output the audio signal as an optical signal.

The processor may be further configured to control the electronic apparatus to transmit response information corresponding to the identified information to the external apparatus.

The electronic apparatus may further include a communication interface, and the processor may be further configured to identify information related to the external apparatus based on the identified information, and transmit communication information to the external apparatus through the communication interface based on the identified information of the external apparatus.

The electronic apparatus may further include: the sound input interface.

In accordance with an aspect of the disclosure a control method of an electronic apparatus includes: identifying a waveform characteristic of sound received through a sound input interface; identifying information corresponding to the identified waveform characteristic of the sound, based on a plurality of attributes indicated by the waveform characteristic of the sound; and outputting a signal to an external apparatus through a signal output interface of the electronic apparatus based on the identified information.

The waveform characteristic of the sound may include any one or any combination of amplitude, frequency, or a period of the sound.

The control method may further include identifying binary data corresponding to the amplitude, the frequency, or the period; and identifying the information based on the identified binary data.

The information may be identified according to a combination of any combination of two or more of the amplitude, the frequency, or the period.

The information may include information related to the external apparatus.

The control method may further include identifying a state of the external apparatus based on the identified information, and the signal may be output to the external apparatus based on the identified state of the external apparatus.

The sound may correspond to an inaudible frequency band.

The signal output to the external apparatus may include an audio signal.

In accordance with an aspect of the disclosure an electronic apparatus includes: a signal input interface; a sound output interface; and a processor configured to: identify binary data corresponding to information to be communicated to an external apparatus providing an audio source signal to the signal input interface, generate a sound signal indicative of the binary data, and output the sound signal through the sound output interface.

The binary data may include two bits, and the sound signal may include a first tone at a first frequency indicative of a first bit of the binary data and a second tone at a second frequency indicative of a second bit of the binary data.

The binary data may include three bits, and a third bit of the binary data may be indicated by period during which the first tone and the second tone are concurrently output.

In accordance with an aspect of the disclosure a control method of an electronic apparatus includes: identifying binary data corresponding to information to be communicated to an external apparatus to a signal input interface of the electronic apparatus, generating a sound signal indicative of the binary data, and outputting the sound signal through a sound output interface of the electronic apparatus.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram illustrating an electronic apparatus and an external apparatus according to an embodiment;
FIG. 2 is a block configuration diagram of the electronic apparatus and the external apparatus according to an embodiment;
FIG. 3 is a flowchart illustrating a method of operating an electronic apparatus according to an embodiment;
FIG. 4 is a diagram of a database (DB) indicating attribute values of attributes corresponding to information of the external apparatus according to an embodiment;
FIG. 5 is a graph illustrating a generation cycle of sound captured by the electronic apparatus according to an embodiment;
FIG. 6 is a graph illustrating strength of sound captured by the electronic apparatus for different frequencies according to an embodiment;
FIG. 7 is a diagram illustrating an operation process performed between the electronic apparatus and the external apparatus according to an embodiment;
FIG. 8 is a flowchart illustrating a method of feeding back, by an electronic apparatus, analysis results of sound output from an external apparatus to the external apparatus according to an embodiment;
FIG. 9 is a diagram of a method of adjusting, by an electronic apparatus, an output signal based on identified information according to an embodiment;
FIG. 10 is a diagram of a method of adjusting, by an electronic apparatus, an output mode based on the identified information according to an embodiment;
FIG. 11 is a diagram of displaying a user interface (UI) that allows a user to select whether to change a mode based on the identified information by the electronic apparatus according to an embodiment;
FIG. 12 is a block configuration diagram of the electronic apparatus and the external apparatus exchanging information with each other through sound according to an embodiment;
FIG. 13 is a diagram of a system including a plurality of apparatuses according to an embodiment;
FIG. 14 is a diagram illustrating a signal transmission/reception relationship between the electronic apparatus, an input apparatus, and the external apparatus when the electronic apparatus captures sound according to an embodiment; and
FIG. 15 is a diagram illustrating a signal transmission/reception relationship between the electronic apparatus, the input apparatus, and the external apparatus when the input apparatus captures sound according to an embodiment.

### DETAILED DESCRIPTION

Hereinafter, embodiments of the disclosure will be described in detail with reference to the accompanying drawings. Embodiments described with reference to each drawing are not mutually exclusive configurations unless otherwise specified, and a plurality of embodiments may be selectively combined and implemented in one apparatus. The combination of the plurality of embodiments may be arbitrarily selected and applied by a person skilled in the art in implementing the spirit of the present disclosure.

As used herein, terms the terms "1st" or "first" and "second" or "2nd" may use corresponding components regardless of importance or order and are used to distinguish one component from another without limiting the components. For example, a "first" component maybe named a "second" component and the "second" component may also be similarly named the "first" component, without departing from the scope of the disclosure.

Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

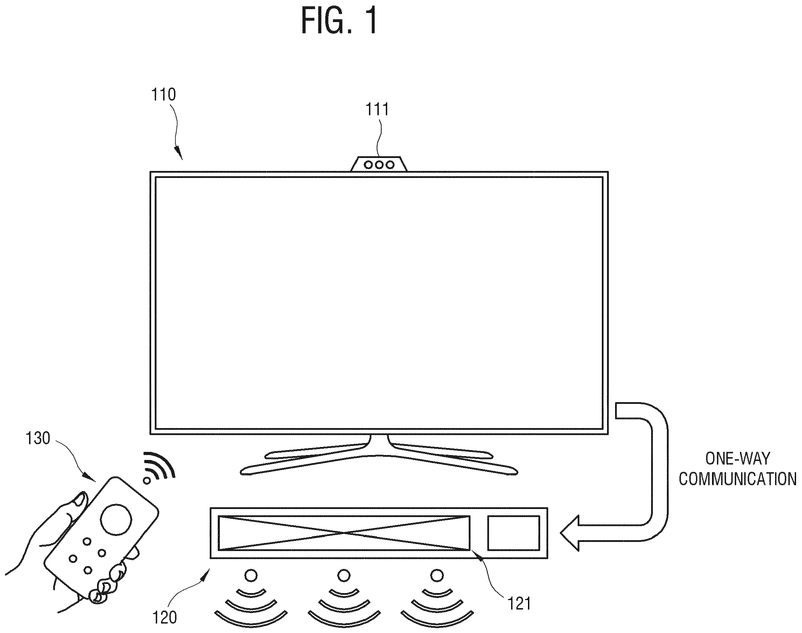

FIG. 1 is a diagram illustrating an electronic apparatus and an external apparatus according to an embodiment.

As illustrated in FIG. 1, an electronic apparatus 110 according to an embodiment is implemented as a display apparatus capable of displaying an image, for example, a TV. The electronic apparatus 110 may be implemented as a computer, a tablet, a portable media player, a wearable device, a video wall, an electronic frame, a display apparatus, an image processing apparatus such as a set-top box without a display, a household appliance such as a refrigerator or a washing machine, or an information processing apparatus such as a computer body. In addition, the electronic apparatus 110 may be an apparatus that is installed and used at a fixed location, or a mobile device that a user can carry and use while moving.

An external apparatus 120 is a separate apparatus from the electronic apparatus 110 and may be implemented as, for example, a sound bar. However, the external apparatus 120 is not limited to the sound bar, and the external apparatus 120 may also be implemented as various types of apparatuses similar to the case of the electronic apparatus 110.

The electronic apparatus 110 and the external apparatus 120 are only terms introduced to distinguish between two separate apparatuses for convenience, and a type of these apparatuses and the like is not limited by the terms. The electronic apparatus 110 is provided to capture sound, whereas the external apparatus 120 is provided to output sound. To this end, the external apparatus 120 has a speaker 121 that outputs sound.

The electronic apparatus 110 has a microphone 111 that captures sound. Alternatively, the microphone 111 may not be installed in a main body of the electronic apparatus 110, but maybe installed in a remote controller 130 that is provided to wirelessly communicate with the electronic apparatus 110 and control the electronic apparatus 110. In the former case, the sound captured by the microphone 111 is converted into an audio signal and transmitted to a processor of the electronic apparatus 110. In the latter case, the sound captured by the microphone is converted into an audio signal in the remote controller 130, converted into a wireless signal, and transmitted to the electronic apparatus 110, and finally transmitted to the processor of the electronic apparatus 110.

The electronic apparatus 110 is connected to the external apparatus 120 to transmit data to the external apparatus 120. As an example, the electronic apparatus 110 and the external apparatus 120 are interconnected according to a one-way communication method, and may be interconnected through an optical communication cable, for example. As another example, the electronic apparatus 110 and the external apparatus 120 maybe interconnected according to a two-way communication method. The optical communication method is a method in which data is converted into an optical signal in a transmitting side and transmitted to a receiving side through an optical cable. According to the optical communication method, the transmitting side has a light emitting element (e.g., a light emitting diode (LED)) that transmits the optical signal, whereas the receiving side has a light receiving element (e.g., a photodiode) that receives the optical signal. That is, the transmitting side may not include alight receiving element and therefore may not receive data from the receiving side that does not include a light emitting element based on the optical communication method.

For example, the electronic apparatus 110, which is a TV, has a display unit (e.g., a display panel) that displays an image and a speaker that outputs audio. The electronic apparatus 110 may not output audio through a speaker provided therein while displaying an image on a display unit, but may instead transmit an audio signal to the external apparatus 120, which is a sound bar, through the optical cable. The external apparatus 120 outputs the audio signal received from the electronic apparatus 110 to the speaker 121.

Hereinafter, the configuration of the electronic apparatus 110 and the external apparatus 120 will be described.

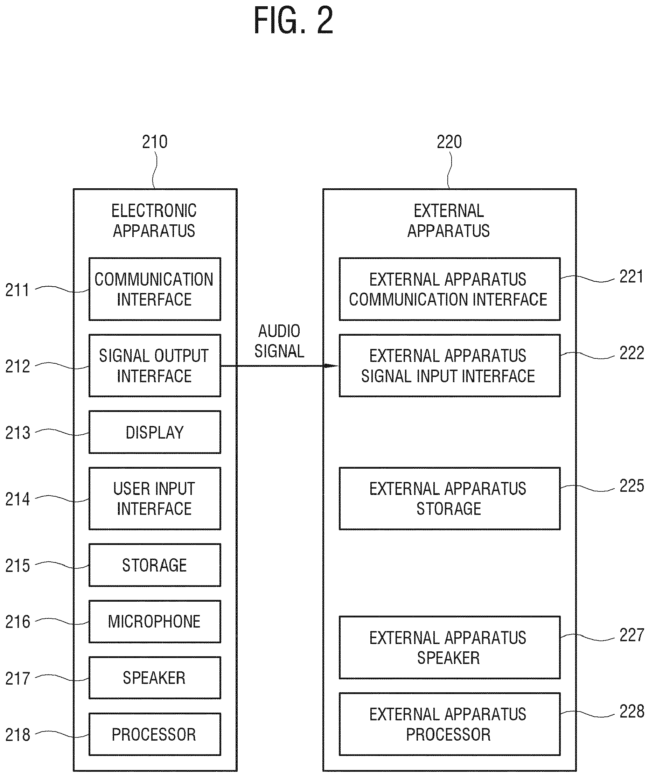

FIG. 2 is a block configuration diagram of the electronic apparatus and the external apparatus according to an embodiment.

As illustrated in FIG. 2, the electronic apparatus 210 includes a communication interface 211, a signal output interface 212, a display 213, a user input interface 214, a storage 215, a microphone, 216, a speaker 217, and a processor 218. The external apparatus 220 includes an external apparatus communication interface 221, an external apparatus signal input interface 222, an external apparatus storage 225, an external apparatus speaker 227, and an external apparatus processor 228.

Hereinafter, the configuration of the electronic apparatus 210 will be described. Although the electronic apparatus 210 is described as a TV, embodiments are not limited thereto and the electronic apparatus 210 may be implemented as various types of apparatuses. According to embodiments, the electronic apparatus 210 may not be implemented as a display apparatus and in this case, the electronic apparatus 210 may not include components for displaying an image, such as the display 213. For example, when the electronic apparatus 210 is implemented as a set-top box, the electronic apparatus 210 may output an image signal to an external TV through the signal output interface 212.

The communication interface 211 is a two-way communication circuit that includes at least one of components such as communication modules and communication chips corresponding to various types of wired and wireless communication protocols. For example, the communication interface 211 may be implemented as a wireless communication module that performs wireless communication with an access point (AP) according to a Wi-Fi system, a wireless communication module that performs one-to-one direct wireless communication such as Bluetooth, or a local area network (LAN) card that is connected to a router or a gateway in a wired manner. The communication interface 211 may communicate with a server on a network to transmit and receive a data packet to and from the server.

The communication interface 211 may receive a control signal transmitted from a remote controller by communicating with the remote controller separated from the main body of the electronic apparatus 210. When the remote controller is provided to transmit an infrared signal, the communication interface 211 may include an infrared receiving module (e.g., an infrared photodiode). Additionally, the remote controller may support direct wireless communication, and the communication with the remote controller can be made by the wireless communication module included in the communication interface 211.

The signal output interface 212 is configured to connect, for example via a wire or cable, with the external apparatus such as a set-top box or an optical media player in a 1:1 or i:N (N is a natural number) method to output data to the external apparatus. The signal output interface 212 may include a connector, a port, or the like according to a predetermined transmission standard, such as an HDMI port, a DisplayPort, a DVI port, a thunderbolt, and a USB port.

The signal output interface 212 may include a one-way communication module. The one-way communication module is a communication module that is provided to transmit a signal only in one direction from the electronic apparatus 210 to the external apparatus 220, and includes, for example, an optical communication module. The optical communication module includes an optical communication chip that converts data into an optical signal, and an optical communication port to which an optical cable is connected to output an optical signal. However, embodiments are not limited thereto and the signal output interface 212 may include a one-way communication module according to various standards, in addition to the optical communication module.

The display 213 includes a display panel that may display an image on a screen. The display panel is provided as a light-receiving structure such as a liquid crystal type or a self-luminous structure such as an organic LED (OLED) type. The display 213 may further include additional components according to the structure of the display panel. For example, if the display panel is a liquid crystal type, the display 213 includes a liquid crystal display panel, a backlight that supplies light, and a panel driving substrate that drives a liquid crystal layer of the liquid crystal display panel.

The user input interface 214 may include various types of input interface related circuits that are provided to be manipulated by a user in order to perform user input. The user input interface 214 can be configured in various forms according to the type of the electronic apparatus 210, and the user input interface 214 may include one or more of, for example, a mechanical or electronic button unit of the electronic apparatus 210, a touch pad, a touch installed on the display 213, and the like.

The storage unit 215 stores digitized data. The storage 215 includes a non-volatile storage that may preserve data regardless of whether or not the storage is supplied with power, and a volatile memory that may be loaded with data processed by the processor 218 and may not preserve data when the storage is not supplied with power. The non-volatile storage includes one or more of, for example, a flash-memory, a hard-disc drive (HDD), a solid-state drive (SSD) read only memory (ROM), and the like, and the volatile memory includes one or more of, for example, a buffer, a random access memory (RAM), and the like.

The microphone 216 or a sound receiver generates an audio signal based on sound in an external environment of the electronic apparatus 210. The microphone 216 transmits the audio signal to the processor 218. The microphone 216 may be installed in a main body of the electronic apparatus 210 or may be installed in the remote controller 5 separate from the main body of the electronic apparatus 210. In the latter case, the audio signal generated by the microphone 216 is received from the remote controller to the communication interface 211. Describing the latter case in more detail, the audio signal generated by the microphone 216 of the remote controller is converted into a digital signal. The remote controller transmits the converted digital signal to the communication interface 211 based on a protocol capable of communicating with the communication interface 211, for example, a protocol such as Bluetooth, Wi-Fi, and ZigBee. The digital signal received by the communication interface 211 is transmitted to the processor 218 and processed.

The speaker 217 is provided to output, as sound, the audio signal processed by the processor 218. For example, the speaker 217 may include one or more speakers that vibrate according to the audio signal. The electronic apparatus 210 itself may include a speaker, but embodiments are not limited thereto and the electronic apparatus 210 may not include the speaker 217.

The processor 218 includes one or more hardware processors implemented as a CPU, a chipset, a buffer, a circuit, and the like that are mounted on a printed circuit board, and may be implemented as a system on chip (SOC) depending on the design method. The processor 270 includes modules which may be configured to perform various processes such as a demultiplexer, a decoder, a scaler, an audio digital signal processor (DSP), and an amplifier when the electronic apparatus 210 is implemented as a display apparatus. Here, some or all of these modules maybe implemented as SOC. For example, a module related to image processing such as a demultiplexer, a decoder, and a scaler maybe implemented as an image processing SOC, and an audio DSP maybe implemented as a separate chipset from the SOC.

In addition, the processor 218 may output sound through the speaker 217. Alternatively, the processor 218 may output the audio signal obtained by the microphone 216 to the external apparatus 220 through the signal output interface 212, and finally, output sound based on the audio signal through the external apparatus speaker 227 of the external apparatus 220.

Hereinafter, the configuration of the external apparatus 220 will be described.

The external apparatus communication interface 221 is a two-way communication circuit that includes at least one of components such as communication modules and communication chips corresponding to various types of wired and wireless communication protocols. The external apparatus communication interface 221 may include a communication chip based on various standards such as Wi-Fi and Bluetooth. In the case of the present embodiment, it is indicated that the external apparatus 220 includes the external apparatus communication interface 221, but the external apparatus communication interface 221 does not necessarily have to be provided in the external apparatus 220. The operation according to an embodiment described below relates to the case where the external apparatus 220 may not communicate with the electronic apparatus 210 through the external apparatus communication interface 221, or the case where the external apparatus 220 is difficult to communicate with the electronic apparatus 210 through the external apparatus communication interface 221 for a predetermined reason. Details of this will be described later.

The external apparatus signal input interface 222 may be connected to the electronic apparatus 210 to receive data and signals from the electronic apparatus 210. According to an embodiment, the external apparatus signal input interface 222 may be connected to the electronic apparatus 210 on a one-way communication basis, for example, the case where the external apparatus is connected to the electronic apparatus 210 through an optical cable. In the case of the optical communication, the external apparatus signal input interface 222 includes components such as a light receiving element that receives an optical signal and a conversion chip that converts the received optical signal into a digital signal. In this case, the external apparatus signal input interface 222 can receive a signal from the electronic apparatus 210, but may not transmit a signal to the electronic apparatus 210.

The external apparatus storage 225 stores digitized data. The external apparatus storage 225 includes a non-volatile storage and a volatile memory. The external apparatus storage 225 stores various pieces of information referenced by the external apparatus processor 228, for example.

The external apparatus speaker 227 outputs, as sound, an audio signal received through the external apparatus signal input interface 222 or an audio signal based on data stored in the external apparatus storage 225. For example, the external apparatus speaker 227 may include one or more speakers that vibrate according to the audio signal.

The external apparatus processor 228 includes one or more hardware processors implemented as a CPU, a chipset, a buffer, a circuit, and the like that are mounted on a printed circuit board. The external apparatus processor 228 processes an audio signal received through the external apparatus signal input interface 222, for example, and outputs, as sound, the processed audio signal through the external apparatus speaker 227. In addition, the external apparatus processor 228 may transmit predetermined information to the electronic apparatus 210 without passing through the external apparatus communication interface 221 or the external apparatus signal input interface 222. Accordingly, the electronic apparatus 210 may obtain information from the external apparatus 220 without passing through the communication interface 211 or the signal output interface 212 and perform an operation corresponding to the obtained information.

Hereinafter, the operation of the electronic apparatus according to an embodiment will be described.

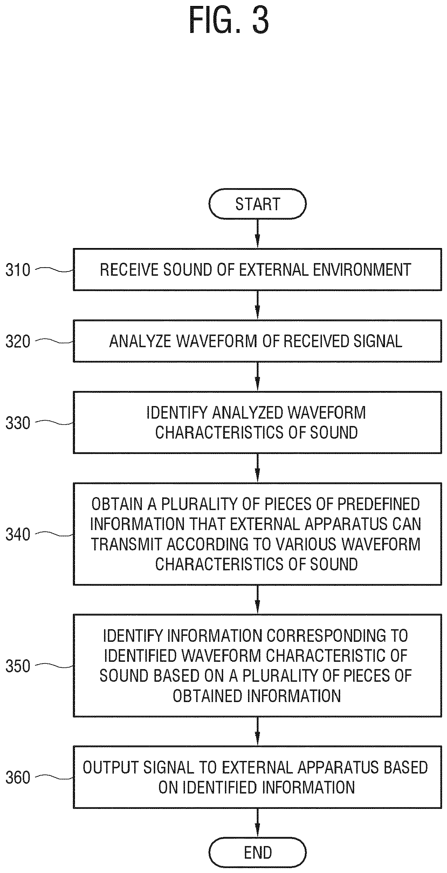

FIG. 3 is a flowchart illustrating a method of operating an electronic apparatus.

As illustrated in FIG. 3, the following operation is performed under control of the processor of the electronic apparatus. For example, the electronic apparatus may be unidirectionally connected to the external apparatus to transmit a signal to the external apparatus, and the external apparatus may not transmit the signal to the electronic apparatus through the connection. This embodiment is described as an example, but embodiments are not limited thereto and the connection between the electronic apparatus and the external apparatus may also include two-way communication.

In step 310, the electronic apparatus receives sound from an external environment.

In step 320, the electronic apparatus analyzes a waveform of the received sound.

In step 330, the electronic apparatus identifies waveform characteristics of the received sound.

In step 340, the electronic apparatus obtains a plurality of predefined pieces of information that the external apparatus can transmit according to the waveform characteristics of the received sound.

In step 350, the electronic apparatus identifies information corresponding to the identified waveform characteristics of the sound based on the plurality of pieces of obtained information.

In step 360, the electronic apparatus outputs a signal to the external apparatus based on the identified information. Alternatively, the electronic apparatus adjusts the signal output to the external apparatus according to the setting corresponding to the identified information. The electronic apparatus according to the present embodiment exemplifies adjusting the signal output to the external apparatus as a subsequent operation corresponding to the identified information. However, embodiments are not limited thereto, and may be applied to other examples described below and various other subsequent operations not explicitly mentioned in the present embodiment.

Accordingly, the electronic apparatus may obtain predetermined information from the external apparatus in a simple manner, even without passing through a communication interface or a signal input/output interface.

Meanwhile, the processor of the electronic apparatus may identify the waveform characteristics of the sound output from the external apparatus as described above, and perform at least some of data analysis, processing, and result information generation for performing an operation of outputting the signal to the external apparatus based on the information corresponding to the identified waveform characteristics by using at least one of machine learning, a neural network, or a deep learning algorithm as a rule-based or artificial intelligence algorithm.

For example, the processor of the electronic apparatus may perform the functions of a learning unit and a recognition unit together. The learning unit may perform a function of generating a trained neural network, and the recognition unit may perform a function of recognizing (or reasoning, predicting, estimating, and determining) data using the trained neural network. The learning unit may generate or update the neural network. The learning unit may obtain learning data to generate the neural network. For example, the learning unit may obtain learning data from storage of an electronic apparatus or from the outside. The learning data may be data used for learning the neural network, and the neural network may be trained using the data performing the above-described operation as the learning data.

Before training the neural network using the learning data, the learning unit may perform a pre-processing operation on the obtained learning data, or select data to be used for learning from a plurality of learning data. For example, the learning unit may process or filter the learning data in a predetermined format, filter, or may be processed in the form of data suitable for learning by adding/removing noise. The learning unit may generate a neural network configured to perform the above-described operation using the pre-processed learning data.

The trained neural network may be constituted by a plurality of neural networks (or layers). The nodes of the plurality of neural networks have weights, and the plurality of neural networks may be connected to each other so that an output value of one neural network is used as an input value of other neural networks. Examples of the neural networks may include models such as a convolutional neural network (CNN), a deep neural network (DNN), a recurrent neural network (RNN), a restricted Boltzmann machine (RBM), a deep belief network (DBN), a bidirectional recurrent deep neural network (BRDNN), and deep Q-networks.

In order to perform the above-described operation, the recognition unit may obtain target data. The target data may be obtained from the storage of the electronic apparatus or the outside. The target data may be data to be recognized by the neural network. Before applying the target data to the trained neural network, the recognition unit may perform the pre-processing operation on the obtained target data, or select data to be used for recognition from a plurality of target data. For example, the recognition unit may process or filter the target data in a predetermined format, filter, or may be processed in the form of data suitable for recognition by adding/removing noise. The recognition unit may obtain an output value output from the neural network by applying the preprocessed target data to the neural network. The recognition unit may obtain a probability value or a reliability value along with the output value.

Hereinafter, when the external apparatus outputs sound based on the environmental information of the external apparatus, the electronic apparatus according to an embodiment, which will be described below, captures the sound, analyzes a waveform of the captured sound, and identifies the information of the external apparatus corresponding to the characteristics of the waveform. The embodiment described below is only one of various examples for implementing the operation of the electronic apparatus described above, and it is to be understood that the specific example does not limit the disclosure.

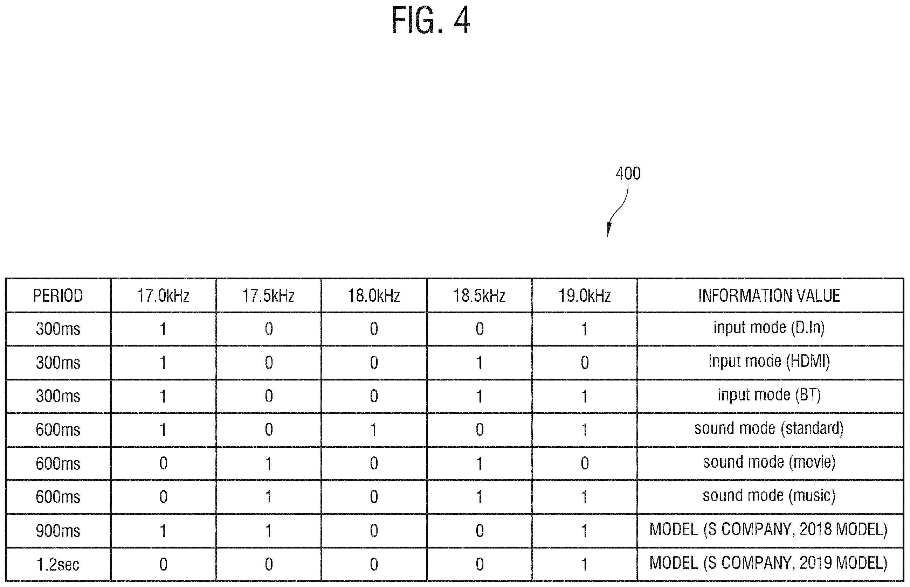

FIG. 4 is a diagram of a DB indicating attribute values of attributes corresponding to the information of the external apparatus according to an embodiment.

As illustrated in FIG. 4, the information (i.e., characteristic information) that the external apparatus transmits to the electronic apparatus includes, for example, various characteristics related to the external apparatus. This information is based on the characteristics of various external apparatuses, such as apparatus attributes of the external apparatus, an apparatus status of the external apparatus, the use environment of the external apparatus, and a use history of the external apparatus. Specifically, examples of the characteristics of the external apparatus include a model name, a manufacturer, and a manufacturing date of the external apparatus, the number of channels supported by the external apparatus, whether the external apparatus supports bass, an input mode and an output mode supported by the external apparatus, service life and surrounding environment of the external apparatus, and the like.

The characteristic information of the external apparatus includes information values of characteristics corresponding to the external apparatus among these various characteristics that the external apparatus may have. For example, the characteristic information has items such as an input mode, an output mode, a model, and the like. In this regard, the characteristic information of the external apparatus value may indicate whether the external apparatus supports an input mode of digital input (D.In) and a sound mode (output mode) optimized for music. Various types of external apparatuses may have unique information values in this way.

In order to distinguish the characteristic information of various external apparatuses, a DB 400 including mapping data of frequencies and periods corresponding to the plurality of information values, respectively, is provided. The DB 400 is provided, including various information values so that a plurality of external apparatuses having different characteristics and various electronic apparatuses can be commonly referenced.

According to the DB 400, mapping data corresponding to one information value may be output in the form of sound through the speaker of the external apparatus, and includes binary data according to attributes of a period and frequency.

The period of the DB 400 represents a repetition period at which the mapping data is output. The number of repetitions of the output may be determined as a preset value, and various values may be applied depending on the design method. For example, when the number of times of the output of the mapping data is designated as six times and the period of the predetermined mapping data is 300 ms, the mapping data is designated to be repeatedly output through the speaker six times every 300 ms.

Regarding the frequency of the DB 400, a plurality of frequencies prepared in advance are designated to correspond to each digit of the binary value of the mapping data. The plurality of frequencies are designated differently from each other, and may be designated in any frequency band. However, it is preferable that these frequencies are designated from an inaudible band. This is because the non-audible band is a frequency band that a general user cannot hear, and when the mapping data uses the non-audible band, noise interference such as living noise can be minimized. Naturally, if the noise countermeasures are sufficient, it is also possible for the mapping data to use the audible band.

When the plurality of frequencies prepared in advance are, for example, 17.0 kHz, 17.5 kHz, 18.0 kHz, 18.5 kHz, and 19.0 kHz in the DB 400, each frequency has a value of 0 or 1 (that is, off or on). When the value of the frequency is 0, it means that the signal is output so that the strength of the output signal at the corresponding frequency is lower than the preset threshold. On the other hand, when the value of the frequency is 1, it means that the signal is output so that the strength of the output signal at the corresponding frequency is greater than the above-described threshold. For example, when the value of the predetermined mapping data is [10001], a value at a frequency of 17.0 kHz represents 1, a value at a frequency of 17.5 kHz represents 0, a value at a frequency of 18.0 kHz represents 0, a value at a frequency of 18.5 kHz represents 0, and a value at a frequency of 19.0 kHz represents 1.

The value of 0 or 1 appears as a magnitude in amplitude of a waveform, where 0 represents relatively small amplitude and 1 is relatively large amplitude. Alternatively, 0 may represent a case where the amplitude is smaller than a predefined set value, and 1 may represent a case where the amplitude is greater than the set value. That is, because the binary data can appear as an attribute of amplitude, in summary, the mapping data output as sound has the waveform characteristics in which the amplitude, the frequency, and the period are combined.

The mapping data is organized as follows by combining the period and frequency as described above. The DB 400 designates a period corresponding to a certain information value and binary data corresponding to a plurality of frequencies. The external apparatus may transmit the corresponding information value to the electronic apparatus by outputting sound based on the binary data at each period described above.

For example, it is assumed that the information value to be transmitted by the external apparatus is the input mode of D.In. Accordingly, the external apparatus outputs sound based on the data of [10001] at each frequency of 17.0 kHz, 17. kHz 5, 18.0 kHz, 18.5 kHz, and 19.0 kHz per period based on the DB 400, and repeats this period every 300 ms. The electronic apparatus may obtain information indicating the input mode of the D.In from the external apparatus by capturing the sound output from the external apparatus and analyzing the sound waveform.

As another example, it is assumed that the information value to be transmitted by the external apparatus is the output mode of the music. Accordingly, the external apparatus outputs sound based on the data of [01011] at each frequency of 17.0 kHz, 17.5 kHz, 18.0 kHz, 18.5 kHz, and 19.0 kHz per period based on the DB 400, and repeats this period every 300 ms. The electronic apparatus may obtain information indicating the output mode of the music from the external apparatus by capturing the sound output from the external apparatus and analyzing the sound waveform.

Hereinafter, an example in which the electronic apparatus captures and analyzes the sound output from the external apparatus will be described.

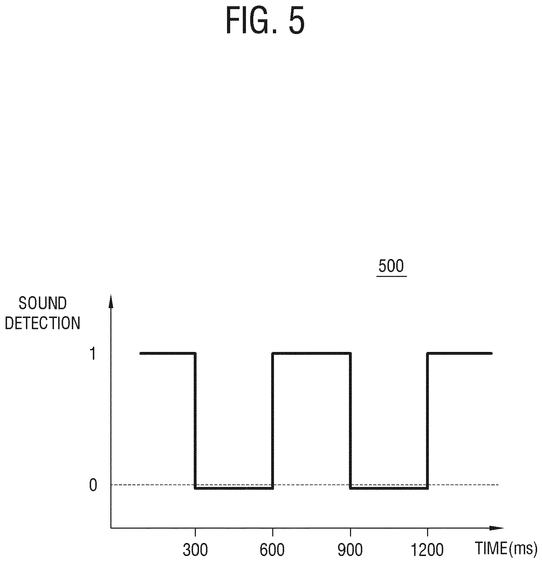

FIG. 5 is a graph illustrating a generation cycle of sound captured by the electronic apparatus according to an embodiment.

As illustrated in FIG. 5, the sound captured by the microphone in the electronic apparatus may be represented by a waveform graph 500. Here, the electronic apparatus does not necessarily have to actually draw the waveform graph 500, and the electronic apparatus may perform an analysis operation according to a predetermined program code or algorithm capable of analyzing the sound waveform.

The electronic apparatus may represent a sound waveform in a time dimension, for example as shown by the graph 500, as to whether the sound is detected. In this graph 500, a horizontal axis represents time, and a vertical axis represents whether sound is detected. In this graph 500, the value of the vertical axis changes from 0 to 1 at 600 ms and 1200 ms, and the time that the value of the vertical axis keeps 1 is represented as 300 ms. That is, the sound can be analyzed as having a unit length of 300 ms and a period of 600 ms. Referring to the DB 400 of FIG. 4, it may be identified that a period of 600 ms indicates an information value of an output mode.

In this way, the electronic apparatus may identify the period from the waveform of the captured sound.

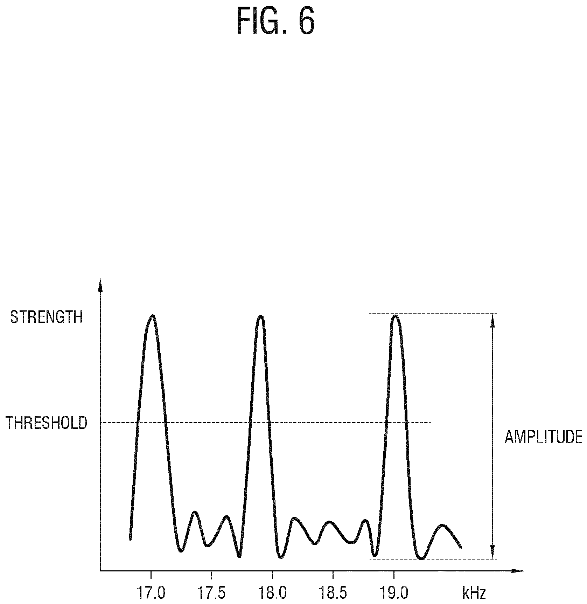

FIG. 6 is a graph illustrating the strength of sound captured by the electronic apparatus for each frequency.

As illustrated in FIG. 6, the sound captured by the microphone in the electronic apparatus may be represented by a waveform graph. This graph represents the strength of sound in the frequency dimension, in which the horizontal axis represents the frequency and the vertical axis represents the strength.

The electronic apparatus checks whether the signal strength exceeds a threshold at a predefined frequency. For example, the electronic apparatus checks whether the strength of sound is greater than a preset first threshold at each of the predefined frequencies of 17.0, 17.5, 18.0, 18.5, and 19.0 (unit of kHz). As the result of the check, if the strength at a corresponding target frequency is greater than a first threshold, a binary value is designated as 1, or otherwise, a binary value is designated as o. By arranging the binary values according to the order of frequencies, a series of binary data represented by the captured sound is obtained.

According to the example of this graph, because1 is represented at the frequency of 17.0 kHz, 0 is represented at the frequency of 17.5 kHz, 1 is represented at the frequency of 18.0 kHz, 0 is represented at the frequency of 18.5 kHz, and 1 is represented at the frequency of 19.0 kHz, it can be seen in this graph that the sound waveform represents binary data of [10101]. Referring to the DB 400 of FIG. 4 above, it may be identified that the binary data of [10101] corresponds to the information value of standard in the output mode.

Although an embodiment has been described in which a binary value of 0 or 1 is identified depending on the loudness at a frequency, embodiments are not limited thereto and other methods of identifying a binary value may be used. For example, the high strength of the waveform at a predetermined timing means that the amplitude of the waveform is large at the timing. For example, the electronic apparatus may check whether the amplitude of the sound at each frequency is greater than a preset second threshold. As the result of the check, if the amplitude at each corresponding target frequency is greater than a second threshold, a binary value is designated as 1, or otherwise, a binary value is designated as o.

According to this method, the electronic apparatus may analyze the waveform of the sound captured by the microphone, identify the characteristics of the sound waveform according to the analysis result, and identify information corresponding to the identified characteristics.

Hereinafter, an operation process performed by each of the electronic apparatus and the external apparatus will be described.

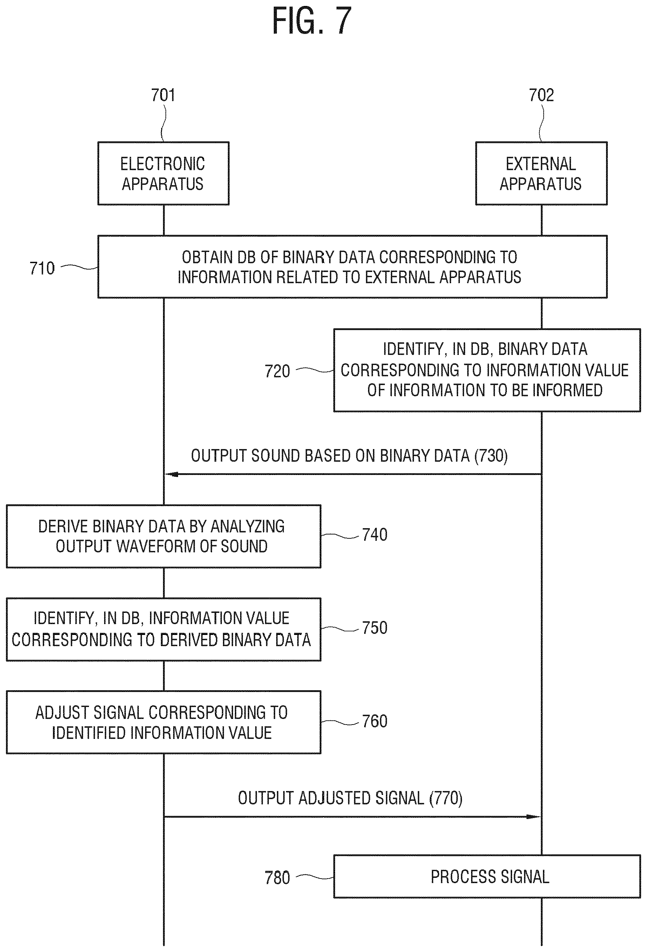

FIG. 7 is an exemplary diagram illustrating an operation process performed between the electronic apparatus and the external apparatus.

As illustrated in FIG. 7, the following operations are performed under control of a processor of an electronic apparatus 701 and a processor of an external apparatus 702.

In step 710, the electronic apparatus 701 and the external apparatus 702 each obtain a DB of binary data corresponding to related information of the external apparatus. That is, the electronic apparatus 701 and the external apparatus 702 obtain a DB for common reference. Alternatively, in the case of the electronic apparatus 701, even if the DB is not necessarily obtained in step 710, the DB may be acquired later when necessary.

In step 720, the external apparatus 702 identifies, in the DB, binary data corresponding to the information value of the information to be notified to the electronic apparatus 701. For example, the binary data is provided corresponding to the frequency and the period.

In step 730, the external apparatus 702 outputs the identified binary data as sound. The external apparatus 702 outputs the binary data through a speaker according to the one or more frequencies and the period designated in the DB.

In step 740, the electronic apparatus 701 captures sound output from the external apparatus 702, analyzes the waveform of the captured sound, and derives the binary data. The method of deriving, by an electronic apparatus 701, binary data generally proceeds in a reverse direction of a method of outputting, by an external apparatus 702, sound based on the binary data.

In step 750, the electronic apparatus 701 identifies information values corresponding to the derived binary data in the DB. Since this DB in the electronic apparatus 701 corresponds to the DB in the external apparatus 702, the electronic apparatus 701 may obtain the information value initially intended by the external apparatus 702.

In step 760, the electronic apparatus 701 adjusts the signal based on the identified information value. For example, when the electronic apparatus 701 is provided to output an audio signal to the external apparatus 702, the electronic apparatus 701 may adjust audio characteristics of an audio signal corresponding to the identified information value (an input mode, an output mode, a model of the external apparatus 702, audio channel supported by the external apparatus 702, and the like).

In step 770, the electronic apparatus 701 outputs the adjusted signal. For example, the electronic apparatus 701 may output a signal according to a one-way communication standard, but is not necessarily limited to this case. A separate communication through which the external apparatus 702 transmits a signal to the electronic apparatus 701 may be implemented.

In step 780, the external apparatus 702 processes the adjusted signal output from the electronic apparatus 701. For example, when the external apparatus 702 is a sound bar and the adjusted signal is an audio signal, the external apparatus 702 outputs a corresponding audio signal as sound through a speaker provided therein.

As described above, the information to be transmitted by the external apparatus may be represented by binary data corresponding to the period, the frequency, and the amplitude (or strength). However, embodiments are not limited thereto, and a combination of two or more of parameters of the period, the frequency, and the amplitude may be selectively used, or some parameters may be substituted.

For example, the binary data in the previous embodiment includes a binary value at a plurality of predefined frequencies, respectively, and therefore may be considered as data corresponding to the frequency and amplitude. In the previous embodiment, a period-related parameter is added to the binary data. However, depending on the design method, the period is not considered, but only the frequency and amplitude may be considered.

Alternatively, even when the frequency and amplitude are considered, more information may be contained in the sound according to the variation of the frequency or amplitude.

In the case of the frequency, as the number of predefined frequencies increases, the length of data increases, and amount of information that may be transmitted by the corresponding data also increases.

In the case of the amplitude, it is considered only whether the value is large or small based on a predetermined threshold value in the previous embodiment, and as a result, only a binary value of 0 or 1 can be represented per one frequency. However, a plurality of threshold values may be defined. In this case, a value that may be represented by each frequency also increases. For example, when a first threshold and a second threshold greater than the first threshold are defined, the electronic apparatus may determine that the value is 0 if the amplitude at a predetermined frequency is lower than the first threshold, and the value is 1 if the amplitude is between the first threshold and the second threshold, the value is 2 if the amplitude is greater than the first and second thresholds, and the like. In this case, three values that may be identified per frequency.

Regarding the substitution of the parameters described above, for example, the external apparatus may output a preset trigger sound prior to the sound based on the binary data, instead of repeatedly outputting the sound every preset period. The trigger sound is predefined sound that the electronic apparatus can identify, and serves as a kind of header. When the trigger sound is detected, the electronic apparatus may identify that the sound detected thereafter contains information transmitted from the external apparatus.

As in the above-described embodiments, a method of transmitting information through sound between the apparatuses may be used when the two-way communication between the apparatuses is not implemented. However, it can also be used when the two-way communication is implemented between the two apparatuses.

For example, even if the electronic apparatus 701 and the external apparatus 702 commonly support the Bluetooth wireless communication standard, one of the electronic apparatus 701 and the external apparatus 702 may be already paired with other apparatuses. In this case, the electronic apparatus 701 and the external apparatus 702 cannot perform Bluetooth communication unless a new pairing process is performed therebetween. The external apparatus 702 may cope with this situation by transmitting information to the electronic apparatus 701 through sound.

Alternatively, the two-way wireless communication may be implemented between the electronic apparatus 701 and the external apparatus 702 and the pairing may be implemented therebetween, but it may be difficult to transmit the information through the two-way wireless communication due to various reasons such as a system load, traffic, and noise in the network environment. For example, while the electronic apparatus 701 is transmitting high-capacity data to the external apparatus 702, it may be difficult for the external apparatus 702 to use an additional frequency band to transmit information to the electronic apparatus 701. The external apparatus 702 may cope with this situation by transmitting information to the electronic apparatus 701 through sound.

The timing when the operation is performed is not limited to a specific timing and may be variously designated. For example, when the power supply is turned on and the booting is completed, the electronic apparatus 701 may transmit a kind of trigger signal to the external apparatus 702 so that the external apparatus 702 outputs sound corresponding to the information. The method of transmitting a trigger signal is not limited, and various communication methods may be applied.

Alternatively, the electronic apparatus 701 may transmit the trigger signal to the external apparatus 702 when a preset user input is performed. Alternatively, when the preset user input is performed on the external apparatus 702, the external apparatus 702 may be provided to output sound corresponding to the information.

Alternatively, an AI assistant provided in the electronic apparatus 701 or the external apparatus 702 may perform the operation in response to a preset event. For example, in the case where the audio signal from the electronic apparatus 701 is set to be output as sound from the external apparatus 702, the AI assistant may perform the above-described operation when it is identified that the corresponding audio signal is output from the speaker of the electronic apparatus 701, not from the external apparatus 702. Alternatively, if the AI assistant identifies that the input/output mode of the external apparatus 702 does not correspond to the input/output mode of the electronic apparatus 701, the above-described operation may be performed.

The case in which the electronic apparatus identifies a waveform of sound output from the external apparatus and immediately reflects the identified result has been described. However, embodiments are not limited thereto. For example, if the electronic apparatus and the external apparatus enable separate two-way communication, a method of feeding back, by an electronic apparatus, an identified result to an external apparatus may be applied depending on the design method. Hereinafter, these embodiments will be described.

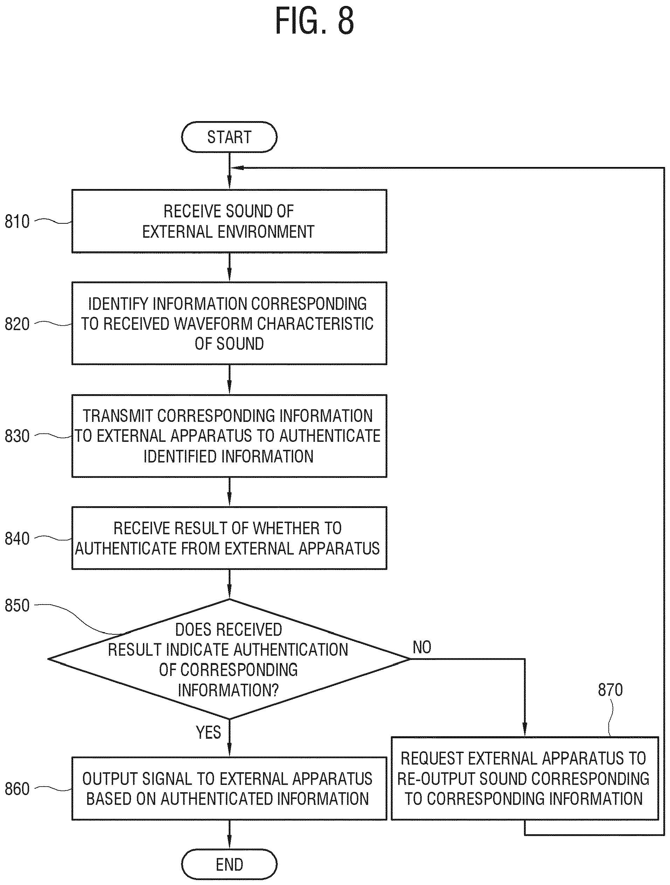

FIG. 8 is a flowchart illustrating a method of feeding back, by an electronic apparatus, analysis results of sound output from an external apparatus to the external apparatus according to an embodiment.

As illustrated in FIG. 8, the following operation is performed under control of the processor of the electronic apparatus.

In step 810, the electronic apparatus receives sound from an external environment.

In step 820, the electronic apparatus identifies information corresponding to the waveform characteristics of the received sound. A method of identifying, by an electronic apparatus, the information is similar to the methods described above.

In step 830, the electronic apparatus transmits the information to the external apparatus for authentication of the identified information. For example, the electronic apparatus feeds back the identified information to the external apparatus so that the external apparatus may authenticate (or confirm) whether the information is correct. The transmission method is not limited, and for example, various methods such as a method that follows on one-way communication to an external apparatus, a method that follows two-way communication additionally implemented between an electronic apparatus and an external apparatus, or a method of transmitting information through sound similar to the case of the external apparatus may be applied.

In step 840, the electronic apparatus receives a result of whether to authenticate the information fed back from the external apparatus.

In step 850, the electronic apparatus identifies whether the received result indicates the authentication of the corresponding information.

If the received result indicates the authentication, in step 860, the electronic apparatus outputs a signal to the external apparatus based on the authenticated corresponding information.

On the other hand, if the received result does not indicate the authentication, in step 870, the electronic apparatus requests the external apparatus to re-output sound corresponding to the information. Then, the electronic apparatus proceeds to step 810 to perform an operation of again analyzing the sound re-output from the external apparatus.

If the number of times the analysis result is not authenticated is greater than or equal to the preset value, the electronic apparatus stops repeating the above-described process and performs a separate operation. For example, the electronic apparatus may notify a user by displaying an error message indicating the current situation.

Although the two-way communication between the electronic apparatus and the external apparatus is possible, there may be several reasons why the external apparatus transmits information to the electronic apparatus through the sound output. For example, the two-way communication between the electronic apparatus and the external apparatus may not be suitable for use at the present time due to network problems such as traffic and noise. Alternatively, even if the two-way communication is available, a method similar to the present embodiment may be used as a part in order to secure various information transmission methods in an IoT environment including many apparatuses.

Meanwhile, the electronic apparatus may adjust various settings or states of signals to be output to the external apparatus based on the identified information. Hereinafter, an example of such an adjustment operation will be described.

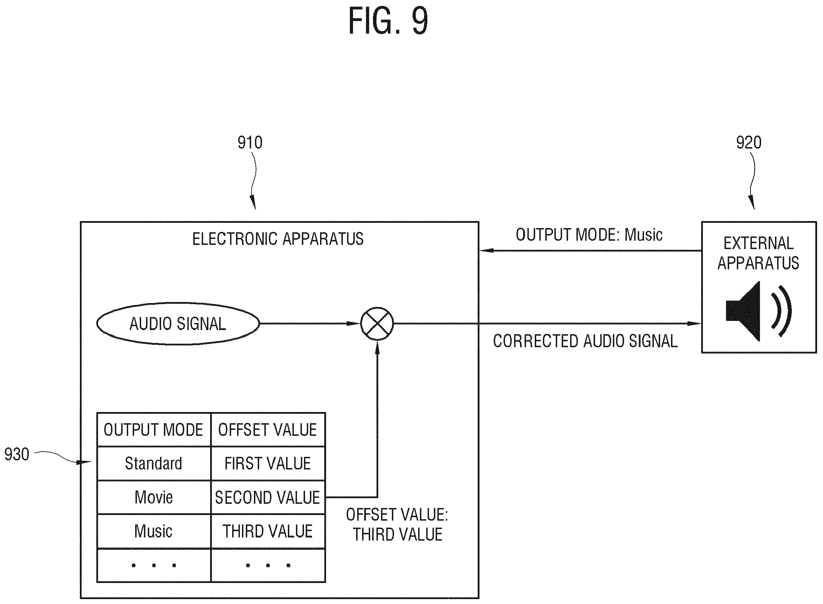

FIG. 9 is a diagram of a method of adjusting, by an electronic apparatus, an output signal based on identified information according to an embodiment.

As illustrated in FIG. 9, an electronic apparatus 910 outputs an audio signal, and an external apparatus 920 outputs an audio signal output from the electronic apparatus 910 as sound through a speaker. Here, the external apparatus 920 may transmit information indicating an output mode of the external apparatus 920 to the electronic apparatus 910 according to the method described in the previous embodiments. For example, this information may indicate that the output mode of the external apparatus 920 is a music mode.

The electronic apparatus 910 may have a table 930 storing offset values for predetermined states of audio signals corresponding to a plurality of output modes, respectively. For example, in the table 930, if the output mode of the external apparatus is standard, an offset value of a predetermined first value may be designated, if the output mode of the external apparatus is movie, an offset value of a predetermined second value may be designated, and if the output mode of the external apparatus is music, and an offset value of a predetermined third value may be designated.

If the information received from the external apparatus 920 indicates that the output mode of the external apparatus is music, the electronic apparatus 910 identifies the third value which is the offset value corresponding to the output mode of the music in the table 930. The electronic apparatus 910 reflects and outputs the identified third value to the audio signal. Accordingly, the audio signal received by the external apparatus 920 is received in a state in which the electronic apparatus 910 is corrected corresponding to the output mode of the external apparatus 920. Here, there may be various ways in which the offset value is reflected in the audio signal, and states of various audio signals such as the volume, channel, and frequency of the audio signal may be adjusted.

In this way, the electronic apparatus 910 may adjust an output signal by reflecting information received from the external apparatus 920. In the present embodiment, a method of adjusting an offset value of an audio signal corresponding to the output mode of the external apparatus 920 has been described. However, the information that the electronic apparatus 910 receives from the external apparatus 920 is not limited to the output mode, and a method of adjusting a signal based on the received information is not limited to the offset values.

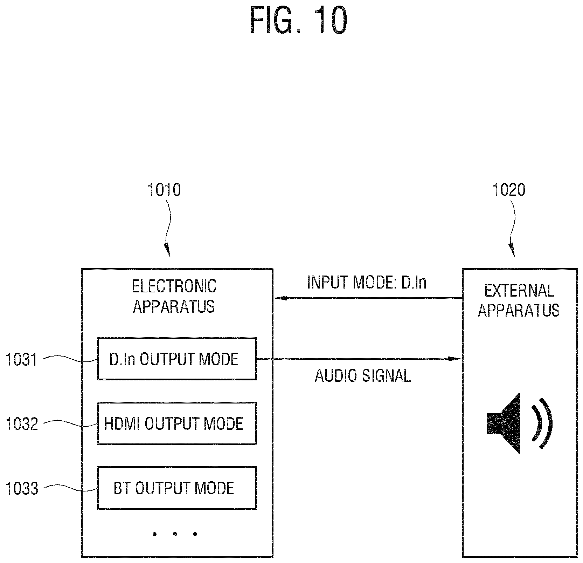

FIG. 10 is a diagram of a method of adjusting, by an electronic apparatus, an output mode based on identified information according to an embodiment.

As illustrated in FIG. 10, an electronic apparatus 1010 outputs an audio signal, and an external apparatus 1020 operates based on the audio signal output from the electronic apparatus 1010 to output sound through a speaker. Here, the external apparatus 1020 may transmit information indicating an input mode of the external apparatus 1020 to the electronic apparatus 1010 according to the method described in the previous embodiments. For example, this information may indicate that the input mode of the external apparatus 1020 is the D.In mode.

The electronic apparatus 1010 may have a plurality of output modes 1031, 1032, and 1033 for outputting audio signals. For example, the electronic apparatus 1010 is based on a hardware structure of a communication interface or a signal input/output interface, and includes various output modes 1031, 1032, and 1033 such as a D.In output mode 1031, an HDMI output mode 1032, and a BT output mode 1033.

If the information received from the external apparatus 1020 indicates that the input mode of the external apparatus 1020 is the D.In mode, the electronic apparatus 1010 adjusts the output mode of the electronic apparatus 1010 to the D.In output mode 1031 so that the output mode of the electronic apparatus 1010 corresponds to the input mode of the external apparatus 1020. The electronic apparatus 1010 outputs the audio signal through the D.In output mode 1031, so the external apparatus 1020 may receive the audio signal through the D.In input mode.

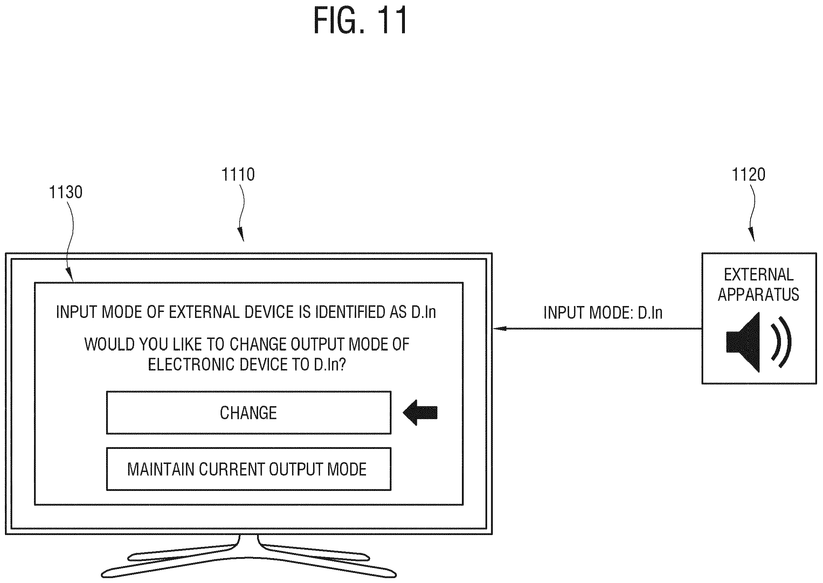

FIG. 11 is a diagram of displaying a UI that allows a user to select whether to change a mode based on the identified information by the electronic apparatus according to an embodiment.

As illustrated in FIG. 11, an electronic apparatus 1110 outputs an audio signal, and an external apparatus 1120 operates based on the audio signal output from the electronic apparatus 1110 to output sound through a speaker. Here, the external apparatus 1120 may transmit information indicating an input mode of the external apparatus 1120 to the electronic apparatus 1110 according to methods described above. For example, this information may indicate that the input mode of the external apparatus 1120 is the D.In mode.

When the information indicating the input mode of the external apparatus 1120 is received, the electronic apparatus 1110 displays a UI 1130 including a message prompting the user to allow the output mode of the electronic apparatus 1110 to be changed in response to the information.

When the user instructs to change the output mode of the electronic apparatus 1110 through the UI 1130, the electronic apparatus 1110 changes the output mode to a mode corresponding to the input mode of the external apparatus. For example, the output mode may be changed to D.In based on the information indicating the input mode of the external apparatus is the D.In and the user authorizing the change through the UI 1130. On the other hand, if the user instructs not to change the output mode of the electronic apparatus 1110 through the UI 1130 or does not perform input through the UI 1130 for a preset time, the electronic apparatus 1110 may maintain the current state without changing the output mode. For example, the output mode may be maintained (i.e., not changed to D.In) based on the information indicating the input mode of the external apparatus is the D.In and the user not authorizing the change through the UI 1130.

The UI 1130 according to the present embodiment performs a function of allowing a user to select a setting change in the electronic apparatus 1110. However, embodiments are not limited thereto, and various design changes are possible. For example, the electronic apparatus 1110 may automatically change the setting without displaying the UI 1130 when the setting change of the electronic apparatus 1110 occurs in response to the information received from the external apparatus 1120. Here, the electronic apparatus 1110 may display a message informing the user of the current state when it is impossible to automatically change the setting.

Alternatively, the electronic apparatus 1110 may not automatically change the setting, but may recommend the user to directly change the setting, or may display a message informing the user how to directly change the setting.

As discussed above, an electronic apparatus including a microphone may analyze a waveform of sound output from an external apparatus including a speaker, and obtain information from the external apparatus according to the analysis result. However, embodiments are not limited thereto and the external apparatus may obtain predetermined information from the electronic apparatus according to the methods discussed above. Hereinafter, these embodiments will be described.

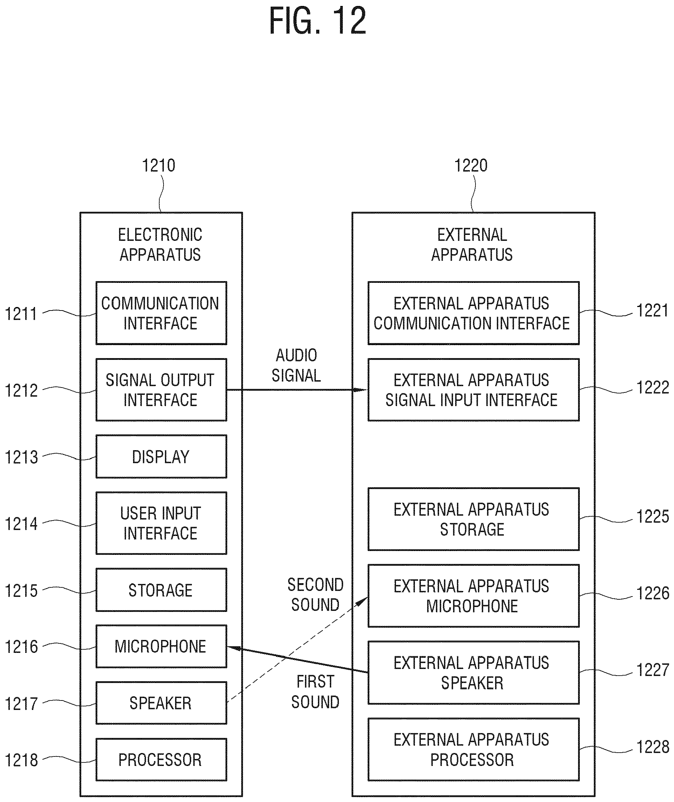

FIG. 12 is a block configuration diagram of the electronic apparatus and the external apparatus exchanging information with each other through sound according to an embodiment.

As illustrated in FIG. 12, an electronic apparatus 1210 includes a communication interface 1211, a signal output interface 1212, a display 1213, a user input interface 1214, a storage 1215, a microphone 1216, a speaker 1217, and a processor 1218. The external apparatus 1220 includes an external apparatus communication interface 1221, an external apparatus signal input interface 1222, an external apparatus storage 1225, an external apparatus speaker 1227, and an external apparatus processor 1228. The above-described components included in the electronic apparatus 1210 and the external apparatus 1220, respectively, are substantially the same as those of FIG. 2, and thus detailed descriptions thereof will be omitted.

As illustrated, the external apparatus 1220 further includes an external apparatus microphone 1226 for capturing sound from an external environment. Under this configuration, the electronic apparatus 1210 and the external apparatus 1220 may each transmit predetermined information through sound. For example, the electronic apparatus 1210 may transmit information to the external apparatus 1220 through sound, and the external apparatus 1220 may transmit information to the electronic apparatus 1210 through sound.

When the external apparatus 1220 has first information to be transmitted to the electronic apparatus 1210, the external apparatus 1220 outputs a first sound corresponding to the first information through the external apparatus speaker 1227. The electronic apparatus 1210 may capture the first sound output through the external apparatus speaker 1227 by the microphone 1216 and obtain the first information by analyzing a waveform of the captured first sound. This operation is similar to the above-described embodiments.

In addition, when the electronic apparatus 1210 has second information to be transmitted to the external apparatus 1220, the electronic apparatus 1210 outputs a second sound corresponding to the second information through the speaker 1217. The external apparatus 1220 may capture the second sound output through the speaker 1217 by the external apparatus microphone 1226 and obtain the second information by analyzing a waveform of the captured second sound. Here, the analysis of the waveform of the second sound performed by the external apparatus 1220 is performed by the external apparatus processor 1228.

If the timing when the electronic apparatus 1210 emits the second sound overlaps with the timing when the external apparatus 1220 emits the first sound, distortion may occur in the waveforms of the first sound and the second sound, respectively. In this regard, the electronic apparatus 1210 and the external apparatus 1220 may use various methods in which the timings when the sounds are output does not overlap. For example, the electronic apparatus 1210 and the external apparatus 1220 may each output sound at a predetermined timing. Alternatively, the electronic apparatus 1210 and the external apparatus 1220 may not output sound for information transmission while the sound is captured by the microphone included therein.

In this way, the method of transmitting, by the external apparatus 1220, first information to an electronic apparatus 1210 and the method of transmitting, by the electronic apparatus 1210, second information to an external apparatus 1220 follow substantially the same principle. When there are two apparatuses, the transmitting side which transmits the information needs a speaker to output sound, and the receiving side which receives the information needs a microphone to capture the sound. That is, when an apparatus includes both the speaker and the microphone, the apparatus may perform both transmission and reception of information.

Such a method of transmitting information is not limited to communicating between two apparatuses, and may be performed under an IoT environment including three or more apparatuses. Hereinafter, these embodiments will be described.

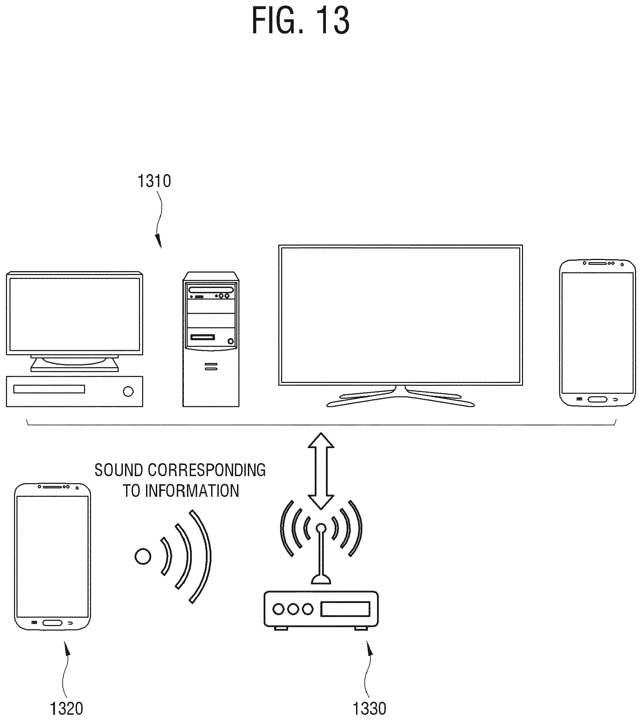

FIG. 13 is a diagram of a system including a plurality of apparatuses according to an embodiment.

As illustrated in FIG. 13, the system includes a plurality of electronic apparatuses 1310. The plurality of electronic apparatuses 1310 is interconnected to enable wireless communication with each other through, for example, an AP 1330. It is considered a case in which the external apparatus 1320 newly enters under such a system environment.

According to the general procedure of IEEE 802.11, in order for the external apparatus 1320 to connect to wirelessly communicate with the AP 1330, it includes a discovery process including steps of beacon, probe request, and probe response, an authentication process including authentication request and authentication response, and a connection process including steps of association request and association response. Hereinafter, a typical communication connection process between the external apparatus 1320 and the AP 1330 according to IEEE 802.11 will be described.

In the beacon step, the AP 1330 emits a beacon including network information of the AP 1330 according to a broadcast manner. In the probe request step, the external apparatus 1320 transmits the probe request to the AP 1330 that emits the beacon according to the reception of the beacon to attempt access. The probe request includes an ID of the external apparatus 1320, such as a MAC address of the external apparatus 1320. In the probe response step, the AP 1330 transmits the probe response in response to the probe request from the external apparatus 1320.

In the authentication request step, the external apparatus 1320 transmits, to the AP 1330, the authentication request including the authentication information on the connection of the AP 1330, such as a preset password for the use of the AP 1330. In the authentication response step, the AP 1330 performs authentication based on the authentication request, and transmits the authentication response including the authentication result to the external apparatus 1320.

In the association request step, the external apparatus 1320 transmits the association request to the AP 1330. In the association response step, the AP 1330 transmits the association response to the external apparatus 1320 in response to the association request, thereby completing the communication connection between the external apparatus 1320 and the AP 1330.

As described above, in order for the external apparatus 1320 to establish the wireless communication connection with the AP 1330, a process of exchanging a lot of information is required. Among these processes, at least some of the processes may be performed by the transmission method through sound as in the previous embodiment.

For example, when the beacon from the AP 1330 is received, the external apparatus 1320 may output information corresponding to the probe request as sound through a speaker included therein. The method of outputting information as sound through a speaker corresponds to a broadcast transmission method because all apparatuses including a microphone may receive the sound. For example, when the AP 1330 includes a microphone, the AP 1330 may obtain the probe request by analyzing the waveform of the sound captured through the microphone, and transmit the probe response to the external apparatus 1320 in response to the probe request. In addition, various information may be transmitted from the external apparatus 1320 through sound in various stages.

A case in which the communication connection between the external apparatus 1320 and the AP 1330 is performed, and thus the external apparatus 1320 is connected to the plurality of electronic apparatuses 1310 through the AP 1330 has been described. However, embodiments are not limited thereto and when the external apparatus 1320 is paired with each electronic apparatus 1310 without passing through the AP 1330, the external apparatus 1320 can directly communicate with each electronic apparatus 1310.

The external apparatus 1320 outputs network information necessary for communication connection with the external apparatus 1320, such as the MAC address of the external apparatus 1320, as sound through the speaker. Each electronic apparatus 1310 captures sound and obtains network information of the external apparatus 1320 through the analysis process. Each electronic apparatus 1310 may obtain predetermined information from the external apparatus 1320 in this way, even if there is no communication connection with the external apparatus 1320. Although not limited to network information, the amount of information may be relatively large depending on the characteristics of information to be transmitted by sound. As described above, by increasing the number of frequencies used when the external apparatus 1320 outputs information as sound or subdividing an identification range of signal strength per frequency, the amount of information transmitted through sound may relatively increase.

Each electronic apparatus 1310 can be used to pair with the external apparatus 1320 later, based on the obtained network information of the external apparatus 1320. When the electronic apparatus 1310 performs pairing with the external apparatus 1320, the information on the external apparatus 1320 obtained according to the above method does not need to be received again from the external apparatus 1320. For example, when obtaining and storing the ID of the external apparatus 1320, the electronic apparatus 1310 may skip the process of searching for the ID of the external apparatus 1320 when pairing with the external apparatus 1320 later, and perform the pairing using the already obtained ID of the external apparatus 1320.

Alternatively, when obtaining the network information of the external apparatus 1320, the electronic apparatus 1310 may identify whether the pairing with the external apparatus 1320 has been performed. If the pairing with the external apparatus 1320 has not been not performed, the electronic apparatus 1310 may automatically perform the pairing with the external apparatus 1320.

When there is an input apparatus for controlling the electronic apparatus, the input apparatus can be configured to control the external apparatus using the above method. Hereinafter, these embodiments will be described.

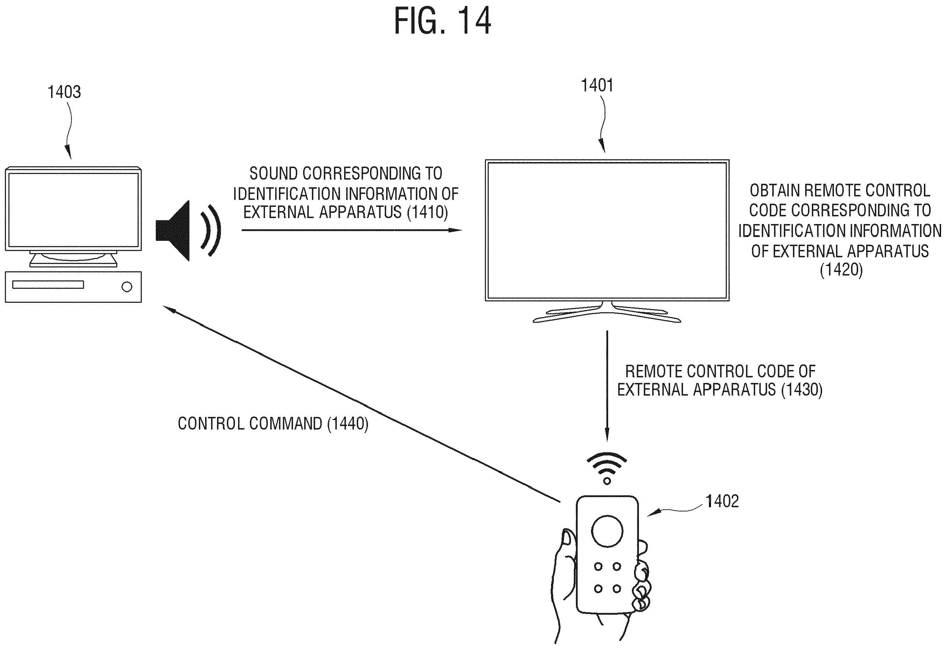

FIG. 14 is an exemplary diagram illustrating a signal transmission/reception relationship between the electronic apparatus, the input apparatus, and the external apparatus when the electronic apparatus captures sound.

As illustrated in FIG. 14, an electronic apparatus 1401, an input apparatus 1402, and an external apparatus 1403 are provided. The input apparatus 1402 may be a remote controller provided to control the electronic apparatus 1401, or may be a general-purpose mobile device in which an application (i.e., app) provided to control the electronic apparatus 1401 is installed. The input apparatus 1402 stores a remote control code of the electronic apparatus 1401 regarding commands for controlling the operation of the electronic apparatus 1401, and as a result, may be provided to control the operation of the electronic apparatus 1401 according to the user operation. Hereinafter, a method of controlling, by an input apparatus 1402, an operation of an external apparatus 1403 will be described.

In step 1410, the external apparatus 1403 outputs sound corresponding to the identification information of the external apparatus 1403 through a speaker.

In step 1420, the electronic apparatus 1401 captures the sound output from the external apparatus 1403, obtains the identification information of the external apparatus 1403 through analysis of the captured sound, and identifies the remote control code of the external apparatus 1403 corresponding to the obtained identification information of the external apparatus 1403. The electronic apparatus 1401 may search for the remote control code of the external apparatus 1403 from various remote control codes previously stored, and receive the remote control code corresponding to the identification information of the external apparatus 1403 from a server storing various remote control codes.

In step 1430, the electronic apparatus 1401 transmits the obtained remote control code of the external apparatus 1403 to the input apparatus 1402. The input apparatus 1402 stores the remote control code of the external apparatus 1403 received from the electronic apparatus 1401, and as a result, may control the operation of the external apparatus 1403.

In step 1440, the input apparatus 1402 transmits the control command for controlling the operation of the external apparatus 1403 to the external apparatus 1403 based on the stored remote control code of the external apparatus 1403 and the user operation.

In this embodiment, the case where the electronic apparatus 1401 captures the sound output from the external apparatus 1403 has been described. However, when the microphone is provided in the input apparatus 1402, the input apparatus 1402 may be configured to capture the corresponding sound. Hereinafter, these embodiments will be described.

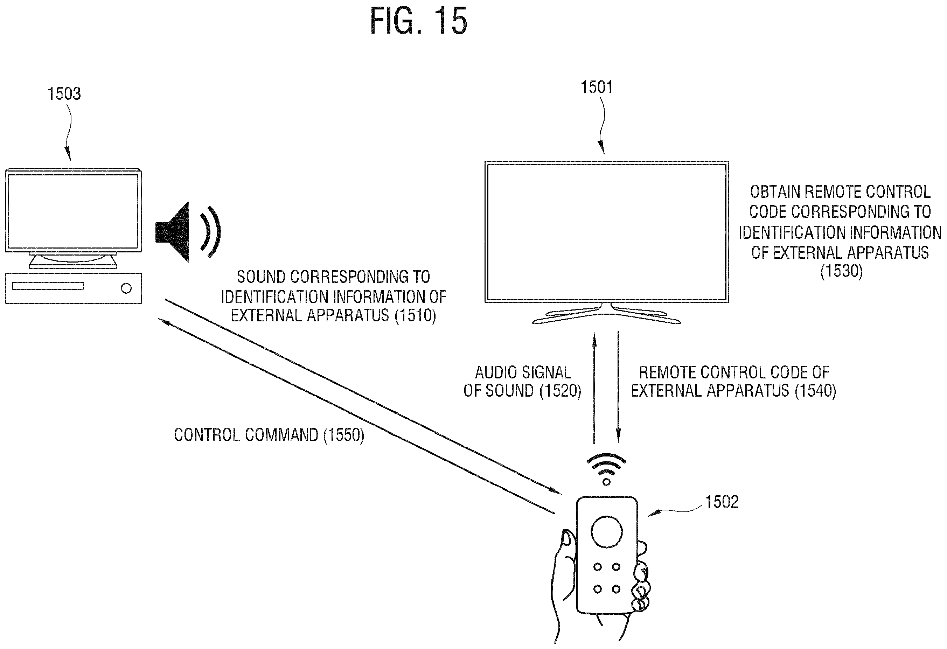

FIG. 15 is a diagram illustrating a signal transmission/reception relationship between the electronic apparatus, the input apparatus, and the external apparatus when the input apparatus captures sound according to an embodiment.

As illustrated in FIG. 15, an electronic apparatus 1501, an input apparatus 1502, and an external apparatus 1503 are provided. The input apparatus 1502 stores a remote control code of the electronic apparatus 1501 regarding commands for controlling the operation of the electronic apparatus 1501, and as a result, may be provided to control the operation of the electronic apparatus 1501 according to the user operation.

In step 1510, the external apparatus 1503 outputs sound corresponding to the identification information of the external apparatus 1503 through a speaker.

In step 1520, the input apparatus 1502 captures the sound output from the external apparatus 1503, and transmits an audio signal of the captured sound to the electronic apparatus 1501.

In step 1530, the electronic apparatus 1501 obtains the identification information of the external apparatus 1503 through analysis of the audio signal received from the input apparatus 1502, and obtains the remote control code of the external apparatus 1503 corresponding to the obtained identification information of the external apparatus 1503.

In step 1540, the electronic apparatus 1501 transmits the obtained remote control code of the external apparatus 1503 to the input apparatus 1502.

In step 1550, the input apparatus 1502 transmits the control command for controlling the operation of the external apparatus 1503 to the external apparatus 1503 based on the stored remote control code of the external apparatus 1503 and the user operation.

As described, the electronic apparatus 1501 transmits the audio signal of the sound captured by the input apparatus 1502 to the electronic apparatus 1501 in order to analyze the audio signal has been described. However, embodiments are not limited thereto and the apparatus for performing the analysis of the audio signal is not limited to the electronic apparatus 1501 alone, and various design changes are possible.

For example, the input apparatus 1502 may analyze the audio signal. In this case, the input apparatus 1502 may obtain the identification information of the external apparatus 1503 through the analysis of the audio signal of the captured sound. The input apparatus 1502 may transmit the obtained identification information to the electronic apparatus 1501 or the server, and obtain the remote control code of the external apparatus 1503 corresponding to the identification information of the external apparatus 1503.

Alternatively, the server communicating with the input apparatus 1502 may analyze the audio signal. In this case, the input apparatus 1502 may transmit the audio signal to the server, and obtain the identification information of the external apparatus 1503 or the remote control code of the external apparatus 1503 from the server. When obtaining the identification information of the external apparatus 1503 from the server, the input apparatus 1502 transmits the identification information of the external apparatus 1503 to another server to obtain the remote control code of the external apparatus 1503 from another server.

The operations of the apparatus as described in the above embodiments may be performed by artificial intelligence implemented by the apparatus. The artificial intelligence can be applied to various systems using machine learning algorithms. The artificial intelligence system is a computer system that implements intelligence corresponding to a human level or comparable to a human level, and is a system in which a machine, an apparatus, or a system autonomously performs learning and determination, and the recognition rate and determination accuracy are improved based on accumulation of use experience. The artificial intelligence technology includes machine learning (deep learning) technologies that use algorithms to classify/learn characteristics of input data, element technologies that simulate functions of recognition, determination, and the like of a human brain using machine learning algorithms, and the like.

Examples of the element technologies include at least one of linguistic understanding technology for recognizing human language/character, visual understanding technology for recognizing objects like human vision, reasoning/prediction technology for logically reasoning and predicting information by determining the information, knowledge expression technology processing human experience information with knowledge data, or motion control technology controlling autonomous driving of vehicles and movement of robots.

The linguistic understanding is a technology of recognizing and applying/processing human languages/characters, and includes natural language processing, machine translation, a dialog system, question and answer, speech recognition/synthesis, and the like.

The inference/prediction is a technology of deciding and logically inferring and predicting information, and includes knowledge/probability-based inference, optimization prediction, preference-based planning, recommendation, and the like.

The knowledge representation is a technology of automating and processing human experience information as knowledge data, and includes knowledge establishment (data generation/ classification), knowledge management (data utilization), and the like.

Methods according to embodiments of the present disclosure may be implemented in a form of program commands that may be executed through various computer means and may be recorded in a computer-readable recording medium. The computer-readable recording medium may include a program command, a data file, a data structure, or the like, alone or a combination thereof. For example, the computer-readable recording medium may include a non-volatile storage such as a USB memory apparatus, a memory such as a random access memory (RAM), a read only memory (ROM), a flash memory, a memory chip, or an integrated circuit, or a storage medium optically or magnetically readable and readable by a machine (for example, a computer), such as a compact disk (CD), a digital versatile disk (DVD), a magnetic disk, a magnetic tape, or the like, regardless of whether data are erasable or rewritable. It may be appropriated that a memory that may be included in a mobile terminal is an example of a storage medium appropriate for storing a program or programs including instructions implementing embodiments of the present disclosure and readable by a machine. The program instructions recorded in this storage medium may be specially designed and constructed for the present disclosure or may be known and usable by those skilled in the art of computer software. Alternatively, the computer program instruction may also be implemented by the computer program product.

Although embodiments of the disclosure have been illustrated and described hereinabove, the disclosure is not limited to the abovementioned specific embodiments, but may be variously modified by those skilled in the art to which the disclosure pertains without departing from the gist of the disclosure as disclosed in the accompanying claims. These modifications should also be understood to fall within the scope of the disclosure.

## Claims

1. An electronic apparatus, comprising:
a signal output interface; and
a processor configured to:
identify a waveform characteristic of sound received through a sound input interface,
identify information corresponding to the identified waveform characteristic of the sound, based on a plurality of attributes indicated by the waveform characteristic of the sound, and
output a signal to an external apparatus through the signal output interface based on the identified information.

2. The electronic apparatus of claim 1, wherein the waveform characteristic comprises any one or any combination of amplitude, frequency, or a period of the sound.

3. The electronic apparatus of claim 2, wherein the processor is further configured to identify binary data corresponding to the amplitude, the frequency, or the period and identify the information based on the identified binary data.

4. The electronic apparatus of claim 2, wherein the processor is further configured to identify the information according to a combination of any combination of two or more of the amplitude, the frequency, or the period.

5. The electronic apparatus of claim 2, wherein the information comprises information related to the external apparatus.

6. The electronic apparatus of claim 5, wherein the processor is further configured to:
identify a state of the external apparatus based on the identified information, and
output the signal based on the identified state of the external apparatus.

7. The electronic apparatus of claim 1, wherein the sound corresponds to an inaudible frequency band.

8. The electronic apparatus of claim 1, wherein the signal output to the external apparatus comprises an audio signal.

9. The electronic apparatus of claim 8, wherein the signal output interface is configured to output the audio signal as an optical signal.

10. The electronic apparatus of claim 1, wherein the processor is further configured to control the electronic apparatus to transmit response information corresponding to the identified information to the external apparatus.

11. The electronic apparatus of claim 1, further comprising a communication interface,
wherein the processor is further configured to identify information related to the external apparatus based on the identified information, and transmit communication information to the external apparatus through the communication interface based on the identified information of the external apparatus.

12. The electronic apparatus of claim 1, further comprising:
the sound input interface.

13. A control method of an electronic apparatus, comprising:
identifying a waveform characteristic of sound received through a sound input interface;
identifying information corresponding to the identified waveform characteristic of the sound, based on a plurality of attributes indicated by the waveform characteristic of the sound; and
outputting a signal to an external apparatus through a signal output interface of the electronic apparatus based on the identified information.

14. The control method of claim 13, wherein the waveform characteristic of the sound comprises any one or any combination of amplitude, frequency, or a period of the sound.

15. The control method of claim 14, further comprising identifying binary data corresponding to the amplitude, the frequency, or the period; and
identifying the information based on the identified binary data.
